# EUROPEAN PATENT APPLICATION

(11) **EP 4 404 347 A1**
(43) Date of publication of application: **24.07.2024**
(21) Application number: 24152056.8
(22) Date of filing: 16.01.2024
(51) Int. Cl.: H01M 50/211, H01M 50/308, H01M 50/691, H01M 10/613, H01M 10/6551, H01M 50/271

(54) **BATTERY PACK AND ELECTRICAL DEVICE**

(30) Priority: 17.01.2023 CN 202310077976
(71) Applicant: Xiamen Ampack Technology Limited, Xiamen City, Fujian Province 361000 (CN)
(72) Inventor: PENG, Fanggui, Xiamen City, Fujian Province, People s Republic of China, 361000 (CN); WU, Mingjie, Xiamen City, Fujian Province, People s Republic of China, 361000 (CN); NONG, Wenbin, Xiamen City, Fujian Province, People s Republic of China, 361000 (CN)
(74) Representative: Icosa

(57) **Abstract**

A battery pack (100) includes a housing and a cell assembly (20). The housing includes a first housing and a second housing. The first housing is connected to the second housing. A first space (101) is formed in the first housing (11). The first housing (11) includes a plurality of sidewalls and a bottom wall (115) connected to the plurality of sidewalls. The plurality of sidewalls and the bottom wall form the first space (101). The cell assembly (20) is accommodated in the first space (101). A first clearance (11a) is formed between the cell assembly (20) and the plurality of sidewalls. The plurality of sidewalls are hermetically connected to the bottom wall. A first through-hole (11b) is disposed on at least one of a sidewall or the bottom wall (115). The first through-hole (11b) extends through the sidewall or the bottom wall (115). The first through-hole (11b) is in communication with the first clearance (11a). The first filler (30) is detachably disposed in the first through-hole (11b). A second clearance (10b) exists between the first filler (30) and the first through-hole (11b). The second clearance (10b) is configured to allow a gas to escape. The battery pack can balance a gas pressure in the first space, improve safety of the battery pack, reduce entry of a liquid into the first space from the first through-hole, and reduce the short-circuit risk.

## Description

### TECHNICAL FIELD

This application relates to the technical field of energy storage, and in particular, to a battery pack and an electrical device.

### BACKGROUND

Battery packs are now widely used in unmanned aerial vehicles, electric vehicles, smart energy storage devices, and other fields. A battery cell inside a battery pack is prone to expand to generate a gas pressure, thereby increasing the gas pressure inside the battery pack. If the pressure is not relieved in time, the battery cell will swell, and the safety of the battery pack in use will be impaired.

### SUMMARY

In view of the situation above, it is necessary to provide a battery pack and an electrical device to exhaust gas and enhance safety of the battery pack.

An embodiment of this application provides a battery pack, including a housing and a cell assembly. The housing includes a first housing and a second housing. The first housing is connected to the second housing. A first space is formed in the first housing. The first housing includes a plurality of sidewalls and a bottom wall connected to the plurality of sidewalls. The plurality of sidewalls and the bottom wall form the first space. The cell assembly is accommodated in the first space. A first clearance is formed between the cell assembly and the plurality of sidewalls. The plurality of sidewalls are hermetically connected to the bottom wall. A first through-hole is provided in at least one of a sidewall or the bottom wall. The first through-hole extends through the sidewall or the bottom wall. The first through-hole is in communication with the first clearance. The first filler is detachably disposed in the first through-hole. A second clearance exists between the first filler and the first through-hole. The second clearance is configured to allow a gas to escape. The gas in the first space is exhausted through the first through-hole, so as to balance the gas pressure in the first space, reduce the risk of swelling of the cell assembly, and improve the safety of the battery pack. The first filler can restrict a liquid from entering the first through-hole, thereby reducing entry of the liquid into the first space from the first through-hole, and reducing the short-circuit risk.

Optionally, in some embodiments of this application, the plurality of sidewalls include a first wall and a second wall that are disposed along a first direction, as well as a third wall and a fourth wall that are disposed along a second direction. The first wall is connected to the third wall and the fourth wall. The second wall is connected to the third wall and the fourth wall. The first wall, the second wall, the third wall, and the fourth wall are connected to the bottom wall and form the first space. The first direction is perpendicular to the second direction.

Optionally, in some embodiments of this application, the first through-hole is provided in at least one of the first wall, the second wall, the third wall, or the fourth wall, so as to facilitate gas exhausting from different directions.

Optionally, in some embodiments of this application, the first through-hole is provided in the bottom wall. The second housing and the bottom wall are disposed along a third direction. The first filler is disposed in the first through-hole along a direction opposite to the third direction. The third direction is perpendicular to both the first direction and the second direction, thereby reducing accumulation of the liquid on the surface of the first filler, alleviating erosion of the liquid into the first filler, and reducing entry of the liquid into the battery pack from the first through-hole.

Optionally, in some embodiments of this application, the first housing includes a first connecting piece. The first connecting piece includes a support portion. The bottom wall is disposed on the support portion. The first connecting piece is provided with a first connecting piece through-hole. The first connecting piece through-hole extends through the first connecting piece along the third direction. A part of the first filler is disposed in the first connecting piece through-hole and connected to the first through-hole, thereby further alleviating erosion of the liquid into the first filler, and reducing entry of the liquid into the battery pack from the first through-hole.

Optionally, in some embodiments of this application, the first connecting piece includes a bottom face. The bottom face is oriented facing from the bottom wall. Along the third direction, an accommodation space is formed between the first filler and the bottom face. The accommodation space causes the first filler to be far away from a mounting face. When a liquid exists on the mounting face, the first filler does not come into direct contact with the liquid, thereby alleviating erosion of the liquid into the first filler, and reducing entry of the liquid into the battery pack from the first through-hole.

Optionally, in some embodiments of this application, the bottom wall includes a first position limiter. The first position limiter is connected to the bottom wall. In the third direction, the first position limiter is located above the first through-hole. The first position limiter can limit the height by which the first filler protrudes from the bottom wall, and reduce the risks that the first filler squeezes the cell assembly, causes damage to the cell assembly, and gives rise to a short circuit.

Optionally, in some embodiments of this application, the battery pack further includes a radiator. The radiator is hermetically connected to surfaces of the first wall, the second wall, the third wall, and the fourth wall. A second space is formed between the radiator, the first housing, and the second housing, thereby increasing strength of connection between the radiator and the first housing.

Optionally, in some embodiments of this application, the radiator is bonded to surfaces of the first wall, the second wall, the third wall, and the fourth wall, thereby further facilitating hermetic connection of the radiator to the surfaces of the first wall, the second wall, the third wall, and the fourth wall.

Optionally, in some embodiments of this application, the first wall includes a first wall region. A first housing insulator is disposed in the first wall region. The first housing insulator is disposed between the first wall region and a first sidewall. The first housing insulator closely fits the first wall region and the first sidewall, thereby further enhancing the hermeticity of connection between the first sidewall and the first wall, and making it more convenient to partition off the first space from the second space.

Optionally, in some embodiments of this application, the second wall includes a second wall region. A second housing insulator is disposed in the second wall region. The second housing insulator is located between the second wall region and a second sidewall. The second housing insulator closely fits the second wall region and the second sidewall, thereby further enhancing the hermeticity of connection between the second sidewall and the second wall, and making it more convenient to partition off the first space from the second space.

Optionally, in some embodiments of this application, a third housing insulator is disposed on the third sidewall. The third housing insulator is disposed between the third sidewall and the third wall. This further enhances hermeticity of the connection between the third sidewall and the third wall, and makes it convenient to partition off the first space from the second space.

Optionally, in some embodiments of this application, a fourth housing insulator is disposed between a fourth sidewall and the fourth wall. This further enhances hermeticity of the connection between the fourth sidewall and the fourth wall, and makes it convenient to partition off the first space from the second space.

Optionally, in some embodiments of this application, the battery pack further includes a connecting support. The connecting support is disposed between the first housing and the second housing. The connecting support connects the first housing to the second housing. The connecting support provided with a second through-hole. The second through-hole is in communication with the second space. The gas in the second space is exhausted through the second through-hole, so as to balance the gas pressure in the second space, reduce the risk caused by an excessive gas pressure, and improve the safety of the battery pack.

Optionally, in some embodiments of this application, the connecting support includes a first extension end portion and a second extension end portion disposed along the first direction. Along the first direction, the first extension end portion protrudes beyond the first wall along a direction opposite to the first direction. The second extension end portion protrudes beyond the second wall along the first direction. The second through-hole extends through at least one of the first extension end portion or the second extension end portion along the third direction. The first extension end portion and the second extension end portion facilitates creation of the second through-hole.

Optionally, in some embodiments of this application, the battery pack further includes a second filler. The second filler is detachably disposed in the second through-hole, and can open or seal the second through-hole. A third clearance exists between the second filler and the second through-hole. The third clearance is configured to allow the gas to escape. The gas in the second space is exhausted through the third through-hole, so as to balance the gas pressure in the second space, reduce the risk of swelling of the cell assembly, and improve the safety of the battery pack.

Optionally, in some embodiments of this application, the second filler is disposed in the second through-hole along a direction opposite to the third direction. The second filler can reduce entry of the liquid into the second space from the second through-hole, and reduce the short-circuit risk.

Optionally, in some embodiments of this application, a first channel is disposed on at least one of the first wall or the second wall. The first space communicates with the second space through the first channel, thereby making it convenient to drain the liquid from the second space, and reducing the short-circuit risk.

Optionally, in some embodiments of this application, the battery pack further includes a first insulator. The first insulator is disposed between the radiator and the cell assembly. The first insulator connects inner surfaces of the first wall, the second wall, the third wall, and the fourth wall, thereby making it more convenient to partition off the first space from the second space.

Optionally, in some embodiments of this application, the first insulator is configured to be formed by curing a flowing insulating material disposed in the battery pack.

An embodiment of this application further provides an electrical device, including the battery pack disclosed in any one of the some embodiments described above.

In the battery pack and the electrical device, the gas in the first space is exhausted through the first through-hole, so as to balance the gas pressure in the first space, reduce the risk of swelling of the cell assembly, and improve the safety of the battery pack. The first filler can restrict a liquid from entering the first through-hole, thereby reducing entry of the liquid into the first space from the first through-hole, and reducing the short-circuit risk.

### BRIEF DESCRIPTION OF DRAWINGS

FIG. 1 is a schematic structural diagram of a battery pack according to some embodiments;
FIG. 2 is a schematic structural diagram of a battery pack from another viewing angle according to some embodiments;
FIG. 3 is a schematic structural diagram of a battery pack from still another viewing angle according to some embodiments;
FIG. 4 is a schematic structural exploded view of a battery pack according to some embodiments;
FIG. 5 is a cross-sectional view of the battery pack shown in FIG. 1 sectioned along an IV-IV line;
FIG 6 is a cross-sectional schematic view of FIG. 1 sectioned along an II-II line;
FIG. 7 is a schematic diagram of FIG. 6 from another viewing angle;
FIG. 8 is a schematic structural diagram of a bottom wall according to some embodiments;
FIG. 9 is a schematic structural diagram of a bottom wall and a first through-hole according to some embodiments;
FIG. 10 is a schematic structural diagram of a radiator according to some embodiments;
FIG. 11 is a schematic structural diagram of a second housing and a second circuit board according to some embodiments;
FIG. 12 is a schematic structural diagram of a connecting support according to some embodiments;
FIG. 13 is a schematic structural diagram from still another viewing angle according to some embodiments;
FIG. 14 is a schematic diagram of FIG. 6 from still another viewing angle;
FIG. 15 is a schematic diagram of FIG. 6 from yet another viewing angle;
FIG. 16 is a schematic structural diagram of a single cell according to some embodiments;
FIG. 17 is a schematic exploded view of a single cell according to some embodiments;
FIG. 18 is a schematic exploded view of a part of a battery pack according to some embodiments;
FIG 19 is a cross-sectional view of FIG. 2 sectioned along an III-III line;
FIG. 20 is a schematic structural diagram of a second wall according to some embodiments;
FIG. 21 is a schematic structural diagram of a second wall and a first spacer according to some embodiments;
FIG. 22 is a schematic structural diagram of a second wall from another viewing angle according to some embodiments;
FIG. 23 is a schematic structural diagram of a second wall and a first spacer from another viewing angle according to some embodiments;
FIG. 24 is a schematic structural diagram of a part of a battery pack according to some embodiments; and
FIG. 25 is a schematic structural diagram of an electrical device according to some embodiments.

List of reference numerals:
battery pack 100
housing 10
first clearance 10a
second clearance 10b
first aperture 10c
second aperture 10d
first housing 11
sidewall 11a
first through-hole 11b
first channel 11c
first section 110
first end 110a
second end 110b
first opening 1101
stepped face 1102
first region 1103
second region 1104
second section 120
third section 130
first wall fastener 1001
second wall fastener 1002
bottom wall fastener 1003
first wall 111
first wall hole 111a
first wall region 111b
first housing insulator 1110
third connecting hole 1111
second wall 112
second wall hole 112a
second wall connecting hole 112b
second wall region 112c
second housing insulator 1120
fourth connecting hole 1121
third wall 113
third wall hole 113a
seventh connecting hole 1131
fourth wall 114
fourth wall hole 114a
eighth connecting hole 1141
bottom wall 115
bottom wall hole 115a
first position limiter 115b
first limiting portion 1151
second limiting portion 1152
third limiting portion 1153
third region 115c
tilting face 1154
fourth region 115d
first connecting piece 116
support portion 1161
bottom face 116a
first connecting piece through-hole 116b
first space 101
second space 102
accommodation space 116c
first fastener 103
second fastener 104
third fastener 105
fourth fastener 106
second housing 12
second housing recess 12a
second circuit board 13
first connecting portion 131
second connecting portion 132
connecting support 14
bracket through-hole 141
first extension end portion 14a
second extension end portion 14b
second through-hole 14c
cell assembly 20
cell 21
cell housing 211
first shell 2111
second shell 2112
first extension portion 2113
second extension portion 2114
first sealing portion 2115
second sealing portion 2116
first part 211a
second part 211b
first recess 211c
electrode assembly 212
electrode terminal 213
welding portion 213a
first end 2131
first terminal 213b
second terminal 213c
first cell row 21a
second cell row 21b
heat dissipation portion 22
first elastomer 221a
first filler 30
radiator 40
first sidewall 40a
first connecting hole 401
second sidewall 40b
second connecting hole 402
third sidewall 40c
fifth connecting hole 403
fourth sidewall 40d
sixth connecting hole 404
first surface 40e
second surface 40f
second channel 40j
first accommodation space 41
second accommodation space 42
third accommodation space 43
first insulator 50
second filler 60
third clearance 60a
first circuit board 70
first conducting strip 71
insulating bracket 80
first spacer 90
first side 91
second side 92
sampling harness 100a
first electrical connecting portion 100b
second electrical connecting portion 100c
second insulator 100d
third insulator 100e
fourth insulator 100f
electrical device 200
first direction X
second direction Y
third direction Z

The following specific some embodiments are intended to describe this application in further detail with reference to the drawings.

### DETAILED DESCRIPTION OF EMBODIMENTS

The following specific some embodiments are illustrative rather than restrictive, and are intended to provide a basic understanding of this application but not to identify key or decisive elements of this application or to limit the scope of protection. To the extent that no structural conflict exists, various technical features mentioned in different some embodiments may be combined in any manner.

A component considered to be "disposed on" another component may be directly disposed on the other component or may be disposed on the other component through an intermediate component. A component considered to be "connected to" another component may be directly connected to the other component or may be connected to the other component through an intermediate component.

Understandably, the terms "perpendicular" and "equal" are a description of an ideal state between two components. In an actual production or use state, one component may be approximately perpendicular or equal to another component. For example, numerically, the term "perpendicular" may represent an angle of 90°±10° between two straight lines, or a dihedral angle of 90°±10° between two planes, or an angle of 90°±10° between a straight line and a plane. Two components described as "perpendicular" to each other may be not absolute straight lines or planes, but may be roughly straight lines or planes. An object is considered to be a "straight line" or "plane" if the overall extension direction of the object is a straight line or plane as viewed from a macro perspective.

The term "parallel" is a description of an ideal state between two components. In an actual production or use state, one component may be approximately parallel to another component. For example, numerically, the term "parallel" may represent an angle of 180°±10° between two straight lines, or a dihedral angle of 180°±10° between two planes, or an angle of 180°±10° between a straight line and a plane. The two components described as "parallel" may be not absolute straight lines or planes, but may be roughly straight lines or planes. An object is considered to be a "straight line" or "plane" if the overall extension direction of the object is a straight line or plane as viewed from a macro perspective.

Unless otherwise defined, when used for describing the number of components, the term "plurality" herein specifically means that there are two or more components.

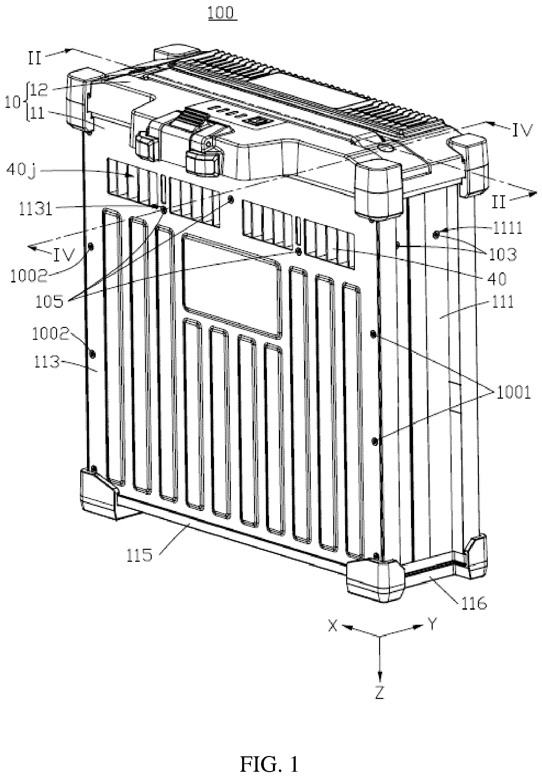

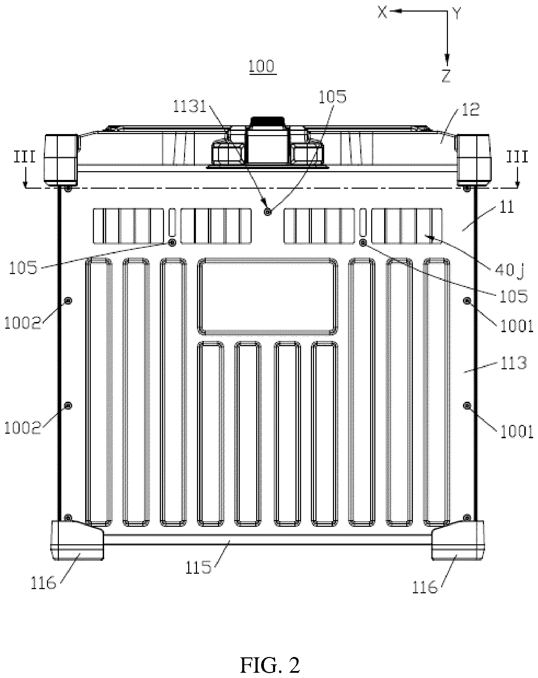

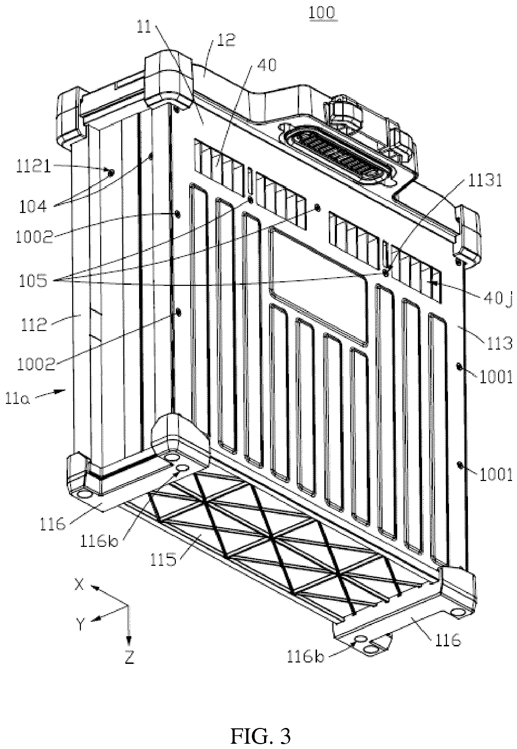

Referring to FIG. 1 to FIG. 5, an embodiment of this application provides a battery pack 100, including a housing 10, a cell assembly 20, and a first filler 30. The housing 10 includes a first housing 11 and a second housing 12. The first housing 11 is connected to the second housing 12. The first housing 11 includes a plurality of sidewalls 11a and a bottom wall 115 connected to the plurality of sidewalls 11a. The plurality of sidewalls 11a and the bottom wall 115 form a first space 101. The cell assembly 20 is accommodated in the first space 101. The cell assembly 20 and the plurality of sidewalls 11a form a first clearance 10a. The plurality of sidewalls 11a are hermetically connected to the bottom wall 115. A first through-hole 11b is provided in at least one of a sidewall 1 1a or the bottom wall 115. The first through-hole 11b extends through the sidewall 11a or bottom wall 115. The first through-hole 11b is in communication with the first clearance 10a. The first filler 30 is detachably disposed in the first through-hole 11b. A second clearance 10b exists between the first filler 30 and the first through-hole 11b. The second clearance 10b is configured to allow a gas to escape. The gas in the first space 101 enters the first through-hole 11b through the first clearance 10a, and is exhausted through the second clearance 10b, so as to balance the gas pressure in the first space 101, reduce the risk of swelling of the cell assembly 20, and improve the safety of the battery pack 100. The first filler can restrict the liquid from entering the first through-hole, thereby reducing entry of the liquid into the first space from the first through-hole, and reducing the short-circuit risk.

In an embodiment, when the battery pack 100 is in use or in a static standing state, if the gas pressure inside the first space 101 is greater than the external gas pressure, the gas can be automatically exhausted out of the first space 101 through the second clearance 10b, and the entry of the liquid into the first space 101 through the first through-hole 11b can be reduced. When the battery pack 100 is in a not-in-use state (a non-discharging state), the first filler 30 can be detached from the first through-hole 11b. The first through-hole 11b can be opened to increase the efficiency of gas exhausting. Optionally, the first through-hole 11b includes a threaded hole. The first filler 30 includes a screw.

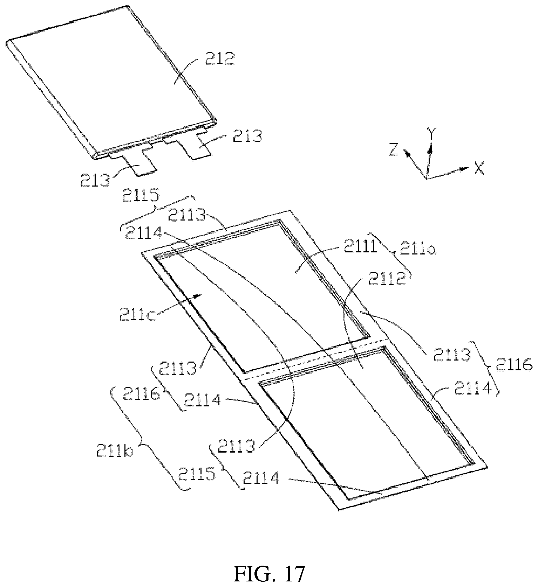

Referring to FIG. 1 to FIG. 5 and FIG. 17, in some embodiments, the sidewall 11a includes a first wall 111, a second wall 112, a third wall 113, and a fourth wall 114. The cell assembly 20 includes a cell 21. The cell 21 includes a cell housing 211, an electrode assembly 212 disposed in the cell housing 211, and electrode terminals 213 connected to the electrode assembly 212 and leading out from the cell housing 211. A first clearance 10a exists between the cell housing 211 and at least one of the first wall 111, the second wall 112, the third wall 113, or the fourth wall 114. The first wall 111 and the second wall 112 are disposed opposite to each other. The third wall 113 and the fourth wall 114 are disposed opposite to each other. The bottom wall 115 and the second housing 12 are disposed opposite to each other. The first wall 111 connects the third wall 113 and the fourth wall 114. The second wall 112 connects the third wall 113 and the fourth wall 114. The bottom wall 115 connects the first wall 111, the second wall 112, the third wall 113, and the fourth wall 114, so as to form the first space 101. Optionally, the first through-hole 11b is provided in the bottom wall 115. Optionally, the first through-hole 11b is provided in at least one of the first wall 111, the second wall 112, the third wall 113, or the fourth wall 114. Optionally, the first through-hole 11b is provided in the bottom wall 115. The first through-hole 11b is also provided in at least one of the first wall 111, the second wall 112, the third wall 113, or the fourth wall 114. This application is described by using an example in which the first through-hole 11b is provided in the bottom wall 115.

Optionally, the first housing 11 includes a heat transfer material, and can enhance the heat dissipation performance. Optionally, the heat transfer material includes a metallic heat transfer material and a heat-transfer insulating material. The insulating material may cover the outer surface of the metallic heat transfer material. Optionally, the metallic heat transfer material of the first housing 11 includes aluminum. Optionally, the surface of the first housing 11 includes a heat-transfer metal material, thereby improving heat dissipation.

To describe the structure of the battery pack 100 more clearly, the structure of the battery pack 100 will be described by using X, Y, and Z coordinate axes. The X-axis, the Y-axis, and Z-axis are perpendicular to one other. It is defined that the X direction is a first direction, the Y direction is a second direction, and the Z direction is a third direction. The first direction X is a direction in which the first wall 111 and the second wall 112 are arranged. The second direction Y is a direction in which the third wall 113 and the fourth wall 114 are arranged. The third direction Z is a direction in which the second housing 12 and the bottom wall 115 are arranged. The first direction X is perpendicular to both the second direction Y and the third direction Z.

Optionally, the first wall 111, the second wall 112, the third wall 113, the fourth wall 114, and the bottom wall 115 may be connected to form the first housing 11 by screwing, welding, bonding, or other means. Optionally, the first wall 111, the second wall 112, the third wall 113, the fourth wall 114, and the bottom wall 115 may be formed in one piece, for example, molded in a one-piece structure by injection molding or metal material extruding.

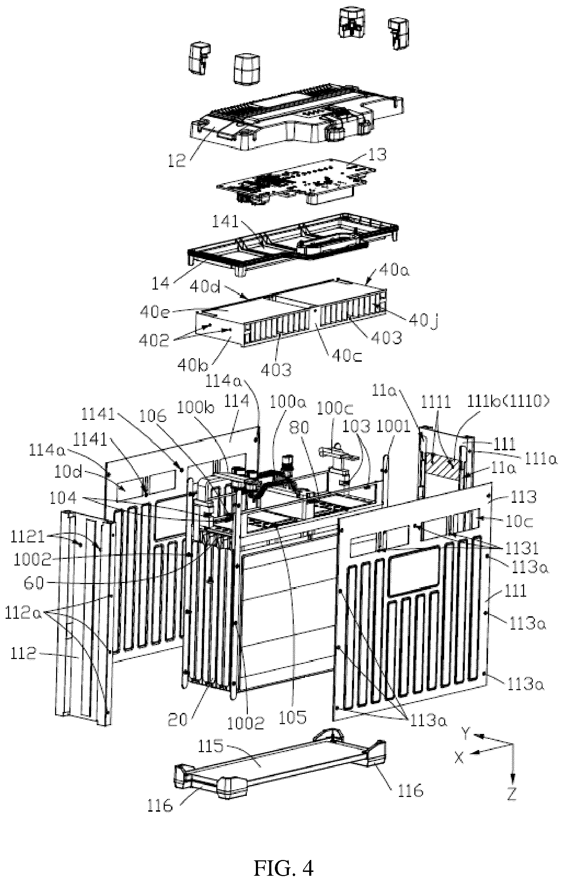

Referring to FIG. 4, FIG. 8, and FIG. 9, an embodiment is described below by using an example in which the first wall 111, the second wall 112, the third wall 113, the fourth wall 114, and the bottom wall 115 are connected by screwing. A first wall hole 111a is created on both sides of the first wall 111 along the second direction Y. A second wall hole 112a is created on both sides of the second wall 112 along the second direction Y. A third wall hole 113a is created on both sides of the third wall 113 along the first direction X. A fourth wall hole 114a is created on both sides of the fourth wall 114 along the first direction X. The battery pack 100 includes a first wall fastener 1001 and a second wall fastener 1002. The first wall fastener 1001 passes through the third wall hole 113a and is fixed to the first wall hole 111a. The first wall fastener 1001 passes through the fourth wall hole 114a and is fixed to the first wall hole 111a on the other side. The second wall fastener 1002 passes through the third wall hole 113a and is fixed to the second wall hole 112a. The second wall fastener 1002 passes through the fourth wall hole 114a and is fixed to the second wall hole 112a on the other side. A bottom wall hole 115a is created on the bottom wall 115. A first wall connecting hole (not shown in the drawing) is created on a side of the first wall 111, the side being oriented toward the bottom wall 115. A second wall connecting hole 112b is created on a side of the second wall 112, the side being oriented toward the bottom wall 115. The battery pack 100 includes a bottom wall fastener 1003. The bottom wall fastener 1003 passes through the bottom wall hole 115a and is fixed to the first wall connecting hole. The bottom wall fastener 1003 passes through the bottom wall hole 115a and is fixed to the second wall connecting hole 112b, thereby implementing hermetic connection between the sidewall 11a and the bottom wall 115.

Optionally, a sealing element is disposed between the first wall fastener 1001 and the third wall hole 113a, and between the first wall fastener 1001 and the first wall hole 111a on one side (not shown in the drawing). A sealing element is disposed between the first wall fastener 1001 and the fourth wall hole 114a, and between the first wall fastener 1001 and the first wall hole 111a on the other side (not shown in the drawing). A sealing element is disposed between the second wall fastener 1002 and the third wall hole 113a, and between the second wall fastener 1002 and the second wall hole 112a on one side (not shown in the drawing). A sealing element is disposed between the second wall fastener 1002 and the fourth wall hole 114a, and between the second wall fastener 1002 and the second wall hole 112a on the other side (not shown in the drawing). A sealing element is disposed between the bottom wall fastener 1003 and the bottom wall hole 115a, and between the bottom wall fastener 1003 and the first wall connecting hole (not shown in the drawing). A sealing element is disposed between the bottom wall fastener 1003 and the bottom wall hole 115a, and between the bottom wall fastener 1003 and the second wall connecting hole 112b (not shown in the drawing), thereby further improving the hermeticity between the sidewall 11a and the bottom wall 115.

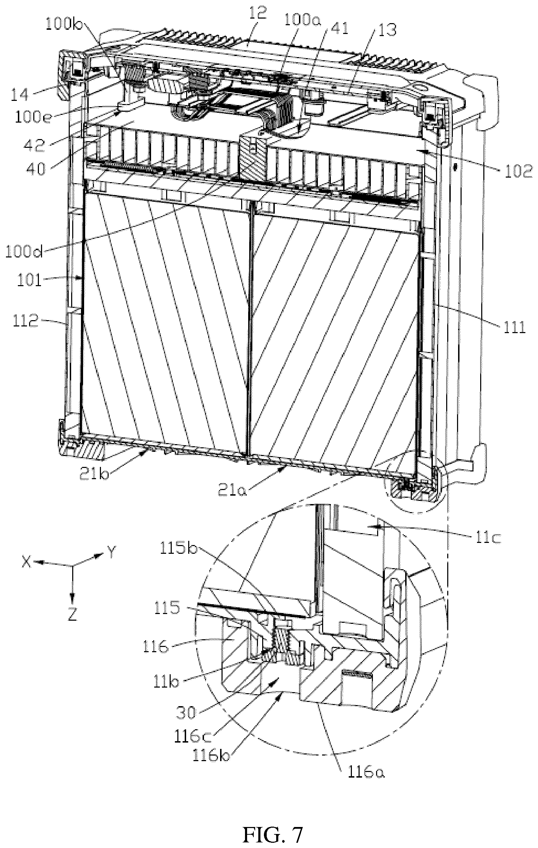

Referring to FIG. 7, FIG. 8, and FIG. 9, in an embodiment, the first through-hole 11b extends through the bottom wall 115 along the third direction Z. A part of the first filler 30 passes through the first through-hole 11b and is disposed in the first space 101. A part of the first filler 30 is located outside the first through-hole 11b. The second clearance 10b is located between the first through-hole 11b and the first filler 30. The bottom wall 115 includes a first position limiter 115b. The first position limiter 115b is connected to the bottom wall 115 and is located above the first through-hole 11b in the third direction Z. The first position limiter 115b can limit the height by which the first filler 30 protrudes from the bottom wall 115, and reduce the risks that the first filler 30 squeezes the cell assembly 20, causes damage to the cell assembly 20, and gives rise to a short circuit. Optionally, the first position limiter 115b includes a first limiting portion 1151, a second limiting portion 1152, and a third limiting portion 1153. The first limiting portion 1151 and the second limiting portion 1152 are disposed opposite to each other, and connected to the edge of the first through-hole 11b. The third limiting portion 1153 is connected to the first limiting portion 1151 and the second limiting portion 1152, and is located above the first through-hole 11b in the third direction Z. When the first filler 30 is disposed in the first through-hole 11b, a part of the first filler 30, which protrudes beyond the first through-hole 11b, may contact the third limiting portion 1153.

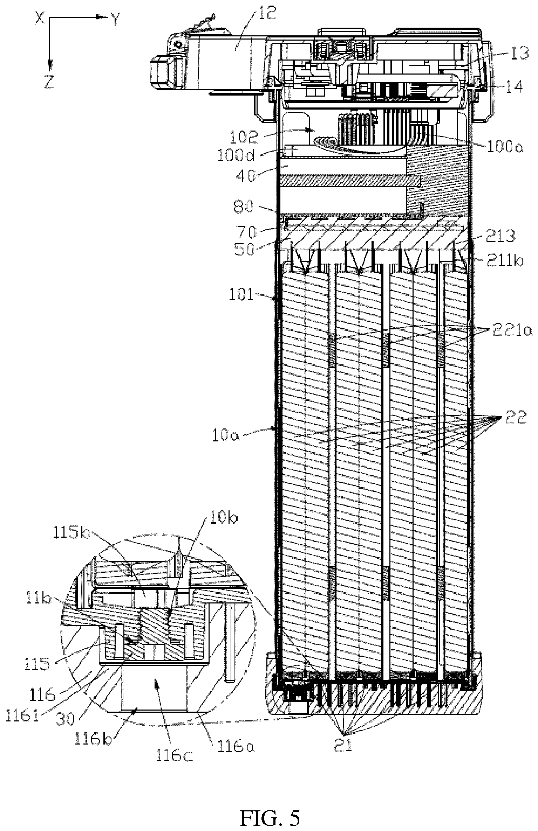

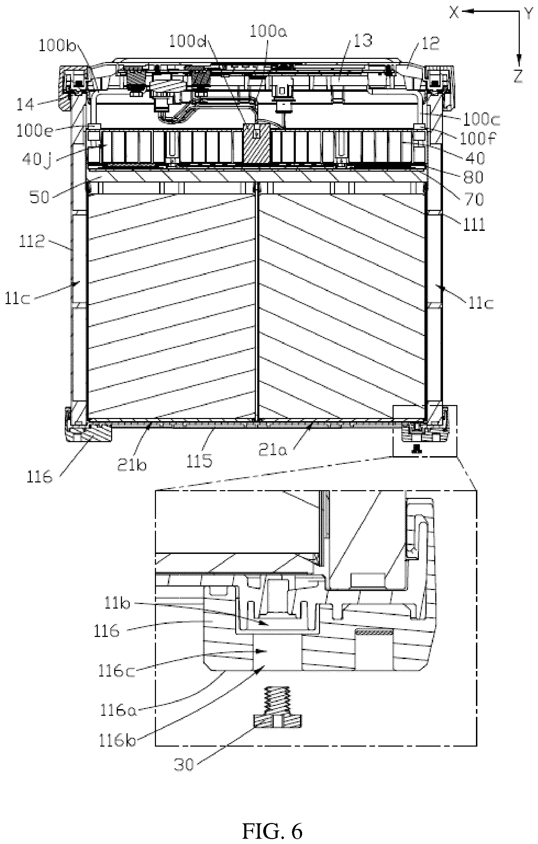

Referring to FIG. 5, FIG. 6, and FIG. 7, in an embodiment, the first housing 11 further includes a first connecting piece 116. The first connecting piece 116 includes a support portion 1161, and the bottom wall 115 is connected to the support portion 1161. The bottom wall 115 and the first connecting piece 116 are disposed along the third direction Z. The first connecting piece 116 includes a bottom face 116a. In mounting the battery pack 100, the bottom face 116a is connected to a mounting face. The first connecting piece 116 provided with a first connecting piece through-hole 116b. The first connecting piece through-hole 116b extends through the first connecting piece 116 along the third direction Z. The first filler 30 is disposed in the first connecting piece through-hole 116b and connected to the first through-hole 11b. Along the third direction Z, an accommodation space 116c is formed between the first filler 30 and the bottom face 116a. The accommodation space 116c allows the first filler 30 to be located far away from the mounting face. When a liquid exists on the mounting face, the first filler 30 does not come into direct contact with the liquid, thereby alleviating erosion of the liquid into the first filler 30, and reducing entry of the liquid into the battery pack 100 from the first through-hole 11b.

Optionally, the first filler 30 is disposed in the first connecting piece through-hole 116b along a direction opposite to the third direction Z, and connected to the first through-hole 11b, thereby reducing accumulation of the liquid on the surface of the first filler 30, alleviating erosion of the liquid into the first filler 30, and reducing entry of the liquid into the battery pack 100 from the first through-hole 11b.

Optionally, two first connecting pieces 116 are disposed. The two first connecting pieces 116 are disposed along the first direction X, and connect the two sides of the bottom wall 115 along the first direction X.

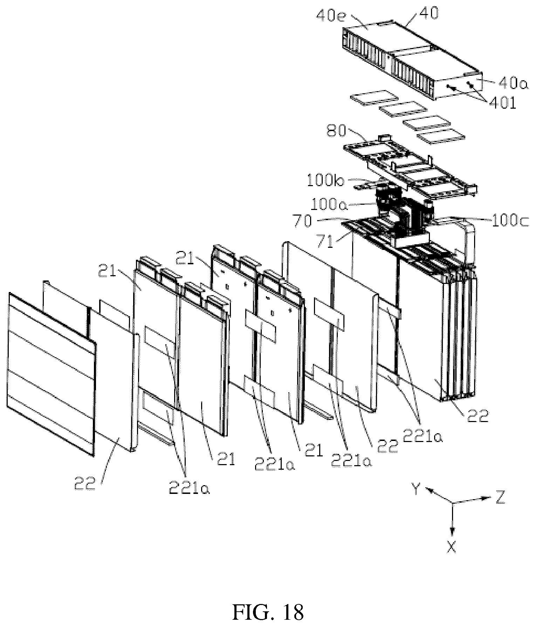

Referring to FIG. 4 to FIG. 7, FIG. 10, and FIG. 18, in some embodiments, the battery pack 100 further includes a radiator 40. The radiator 40 is connected to the inner surfaces of the first wall 111, the second wall 112, the third wall 113, and the fourth wall 114. A second space 102 is formed between the radiator 40 and the second housing 12. The first space 101 is hermetically partitioned off from the second space 102.

In an embodiment, the radiator 40 includes a first sidewall 40a and a second sidewall 40b disposed along the first direction X. The first sidewall 40a provided with a first connecting hole 401, the second sidewall 40b provided with a second connecting hole 402, the first wall 111 provided with a third connecting hole 1111, the second wall 112 provided with a fourth connecting hole 1121. The battery pack 100 includes a first fastener 103. The first fastener 103 passes through the third connecting hole 1111, and is disposed in the first connecting hole 401, so as to fix the first sidewall 40a to the first wall 111. The battery pack 100 includes a second fastener 104. The second fastener 104 passes through the fourth connecting hole 1121, and is disposed in the second connecting hole 402, so as to fix the second sidewall 40b to the second wall 112. By fixing the first sidewall 40a of the radiator 40 to the first wall 111 and fixing the second sidewall 40b to the second wall 112, the first space 101 is hermetically partitioned off from the second space 102.

In an embodiment, the radiator 40 includes a third sidewall 40c and a fourth sidewall 40d disposed along the second direction Y. The third sidewall 40c provided with a fifth connecting hole 403, the fourth sidewall 40d provided with a sixth connecting hole, the third wall 113 provided with a seventh connecting hole 1131, and the fourth wall 114 provided with an eighth connecting hole 1141. The battery pack 100 includes a third fastener 105. The third fastener 105 passes through the seventh connecting hole 1131, and is disposed in the fifth connecting hole 403, so as to fix the third sidewall 40c to the third wall 113. The battery pack 100 includes a fourth fastener 106. The fourth fastener 106 passes through the eighth connecting hole 1141, and is disposed in the sixth connecting hole 404, so as to fix the fourth sidewall 40d to the fourth wall 114. By fixing the third sidewall 40c of the radiator 40 to the third wall 113 and fixing the fourth sidewall 40d to the fourth wall 114, this application increases of the strength of connection between the radiator 40 and the first housing 11, improves the hermeticity of the connection between the radiator 40 and the first housing 11, and makes it convenient to partition off the first space 101 from the second space 102 hermetically. Optionally, the first fastener 103, the second fastener 104, the third fastener 105, and the fourth fastener 106 each include a screw.

In an embodiment, the first wall 111 includes a first wall region 111b. A first housing insulator 1110 is disposed in the first wall region 111b. The first housing insulator 1110 is disposed between the first wall region 111b and the first sidewall 40a. The first housing insulator 1110 closely fits the first wall region 111b and the first sidewall 40a, thereby improving the hermeticity of connection between the first sidewall 40a and the first wall 111, and making it more convenient to partition off the first space 101 from the second space 102 hermetically. Optionally, the first housing insulator 1110 is thermally conductive, and can transfer heat on the radiator 40 to the first wall 111. Optionally, the first housing insulator 1110 includes glue. Optionally, the glue includes a thermal glue. Optionally, the first housing insulator 1110 further prevents outside impurities, such as water, from entering the cell assembly 20.

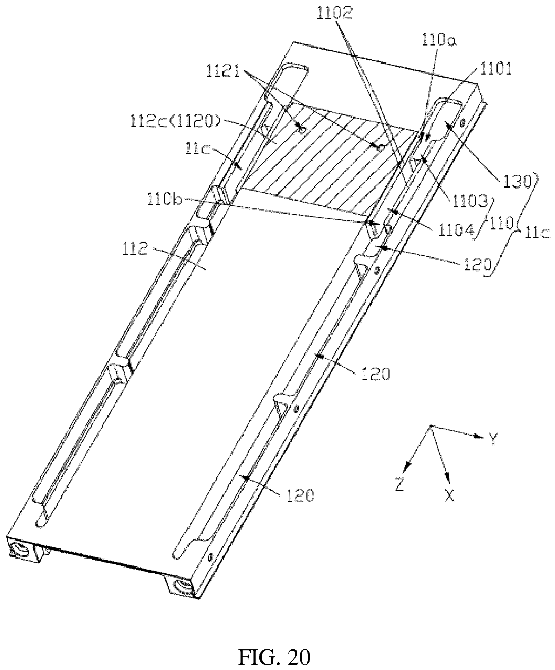

Referring to FIG. 4 and FIG. 20, in an embodiment, the second wall 112 includes a second wall region 112c. A second housing insulator 1120 is disposed in the second wall region 112c. The second housing insulator 1120 is located between the second wall region 112c and the second sidewall 40b. The second housing insulator 1120 closely fits the second wall region 112c and the second sidewall 40b, thereby improving the hermeticity of connection between the second sidewall 40b and the second wall 112, and making it more convenient to partition off the first space 101 from the second space 102 hermetically. Optionally, the second housing insulator 1120 is thermally conductive, and can transfer heat on the radiator 40 to the second wall 112. Optionally, the second housing insulator 1120 includes glue. Optionally, the glue includes a thermal glue. Optionally, the second housing insulator 1120 further prevents outside impurities, such as water, from entering the cell assembly 20.

In an embodiment, a third housing insulator (not shown in the drawing) is disposed on the third sidewall 40c. The third housing insulator is disposed between the third sidewall 40c and the third wall 113, thereby further enhancing the hermeticity of connection between the third sidewall 40c and the third wall 113, and making it more convenient to partition off the first space 101 from the second space 102 hermetically. Optionally, the third housing insulator includes glue. Optionally, the glue includes a thermal glue. Optionally, the third housing insulator further prevents outside impurities, such as water, from entering the cell assembly 20.

A fourth housing insulator (not shown in the drawing) is disposed on the fourth sidewall 40d. The fourth housing insulator is disposed between the fourth sidewall 40d and the fourth wall 114, thereby enhancing the hermeticity of connection between the fourth sidewall 40d and the fourth wall 114, and making it more convenient to partition off the first space 101 from the second space 102 hermetically. Optionally, the fourth housing insulator includes glue. Optionally, the glue includes a thermal glue. Optionally, the fourth housing insulator further prevents outside impurities, such as water, from entering the cell assembly 20. By means of the first housing insulator 1110, the second housing insulator 1120, the third housing insulator, and the fourth housing insulator, it is more convenient to implement hermetic connection between the radiator 40 and the surfaces of the first wall 111, the second wall 112, the third wall 113, and the fourth wall 114, and more convenient to partition off the first space 101 from the second space 102 hermetically.

Referring to FIG. 5 to FIG. 7, in an embodiment, the battery pack 100 further includes a first insulator 50. The first insulator 50 is disposed in a clearance between the cell assembly 20 and the radiator 40 to hermetically insulate the space between the cell assembly 20 and the radiator 40. The first insulator 50 connects inner surfaces of the first wall 111, the second wall 112, the third wall 113, and the fourth wall 114, thereby making it more convenient to partition off the first space 101 from the second space 102 hermetically. When the battery pack 100 is subjected to an external impact force, the first insulator 50 enhances protection for the battery pack 100. Optionally, the first insulator 50 is of a high heat transfer coefficient, thereby improving the heat dissipation for the battery pack 100.

In an embodiment, the first insulator 50 is configured to be formed by curing a curable first insulating material disposed in the battery pack 100. Optionally, the first insulator 50 includes one of a polyurethane adhesive, an epoxy adhesive, or a silicone adhesive. Optionally, the insulating material includes thermal silicone. The heat transfer coefficient of the first insulator 50 is A, satisfying: 0.8 W/(m·K) < A ≤ 3.0 W/(m·K). The heat transfer coefficient A is any one of 0.9 W/(m·K), 1.0 W/(m·K), 1.1 W/(m·K), 1.2 W/(m·K), 1.3 W/(m·K), 1.4 W/(m·K), 1.5 W/(m·K), 1.6 W/(m·K), 1.7 W/(m·K), 1.8 W/(m·K), 1.9 W/(m·K), 2.0 W/(m·K), 2.1 W/(m·K), 2.2 W/(m·K), 2.3 W/(m·K), 2.4 W/(m·K), 2.5 W/(m·K), 2.6 W/(m·K), 2.7 W/(m·K), 2.8 W/(m·K), 2.9 W/(m·K), or 3.0 W/(m·K).

In an embodiment, the cell assembly 20 and the radiator 40 are mounted in the first housing 11, and the radiator 40 is connected to the first housing 11, and then the first housing 11 is inverted along the third direction Z. At this time, the bottom wall 115 is not connected to the first wall 111, the second wall 112, the third wall 113, or the fourth wall 114. The flowing first insulating material is injected into the battery pack 100. The flowing first insulating material is injected into the battery pack 100 from the bottom of the cell assembly 20 along a direction opposite to the third direction Z. After the first insulator 50 is cured, the bottom wall 115 is mounted to the first wall 111, the second wall 112, the third wall 113, and the fourth wall 114.

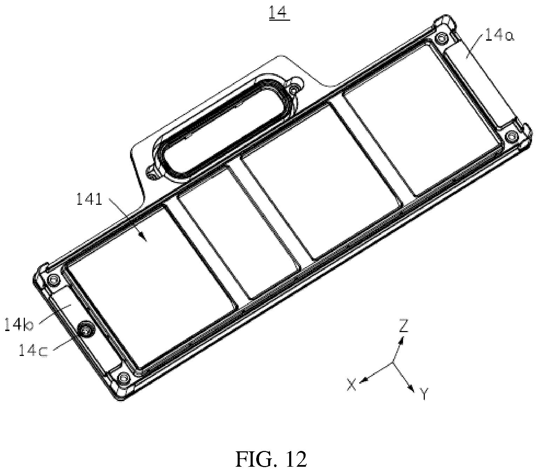

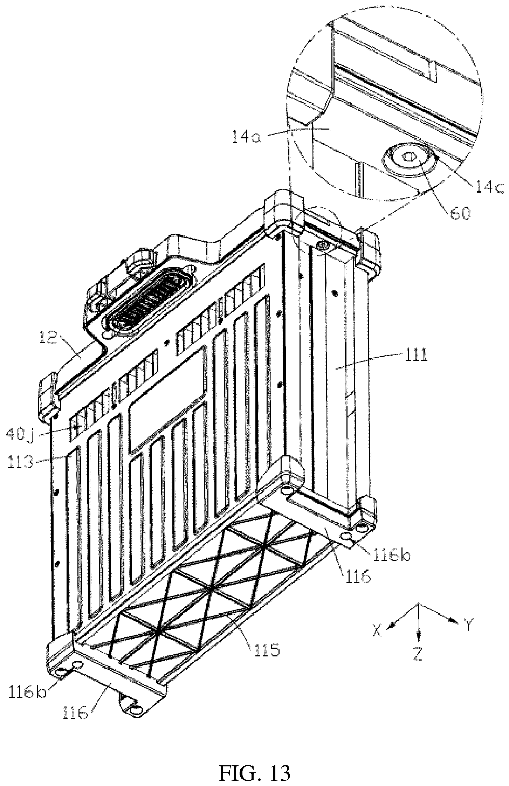

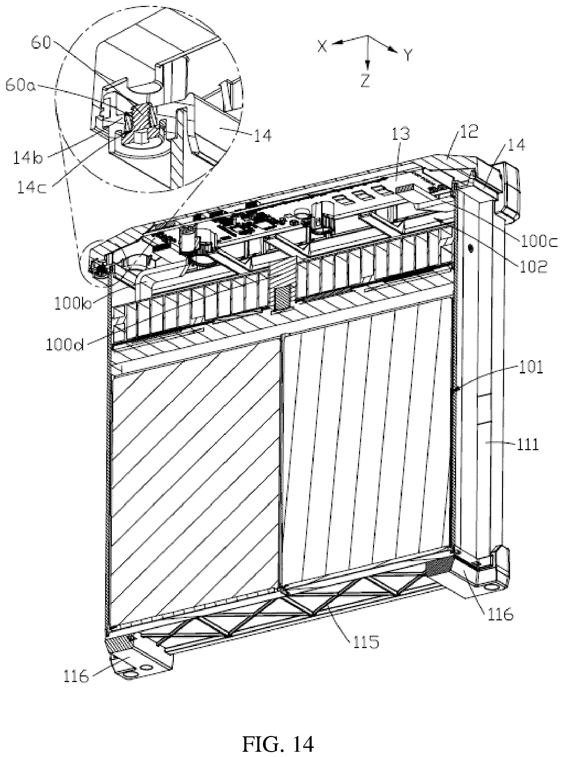

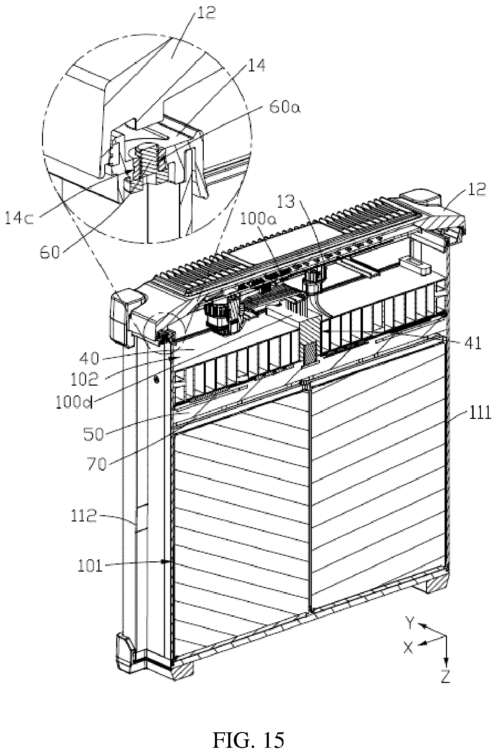

Referring to FIG. 4 and FIG. 11 to FIG. 15, in an embodiment, the battery pack 100 further includes a second circuit board 13. The second housing 12 includes a second housing recess 12a. The second circuit board 13 is disposed in the second housing recess 12a, and is insulated from the second housing 12. A first connecting portion 131 and a second connecting portion 132 are disposed on the second circuit board 13. The first connecting portion 131 and the second connecting portion 132 are configured to connect other conductive pieces. Optionally, a first insulator 50 is disposed in the second housing recess 12a. The first insulator 50 covers the second circuit board 13 to provide insulative protection for the second circuit board 13. The first connecting portion 131 and the second connecting portion 132 protrude beyond the first insulator 50.

Optionally, the second circuit board 13 includes a BMS assembly (Battery Management System). Specifically, the BMS assembly includes a plurality of electronic components. The plurality of electronic components can implement functions such as control, protection, communication, SOC calculation, signal transmission, and power transmission for the battery. Optionally, the second circuit board 13 includes a flexible circuit board (FPC, Flexible Printed Circuit). Optionally, the second circuit board 13 includes a printed circuit board (PCB, Printed Circuit Board). The second circuit board 13 is populated with a plurality of traces (not shown in the drawing).

In an embodiment, the battery pack 100 further includes a connecting support 14. The connecting support 14 is disposed between the first housing 11 and the second housing 12. The first housing 11 and the second housing 12 are hermetically connected to the connecting support 14. The connecting support 14 is disposed between the second circuit board 13 and the radiator 40, thereby reducing the risk of a short circuit between the second circuit board 13 and the radiator 40. Optionally, the connecting support 14 is made of an insulating material.

In an embodiment, a second space 102 is formed between the second circuit board 13 and the radiator 40. The connecting support 14 provided with a bracket through-hole 141. The bracket through-hole 141 communicates with the second space 102, thereby making it convenient for the radiator 40 to dissipate heat for the second circuit board 13.

In an embodiment, the connecting support 14 includes a first extension end portion 14a and a second extension end portion 14b disposed along the first direction X. Along the first direction X, the first extension end portion 14a protrudes beyond the first wall 111 along a direction opposite to the first direction X, and the second extension end portion 14b protrudes beyond the second wall 112 along the first direction X. A second through-hole 14c is provided in at least one of the first extension end portion 14a or the second extension end portion 14b. The second through-hole 14c extends through the first extension end portion 14a and/or the second extension end portion 14b along the third direction Z. The second through-hole 14c communicates with the second space 102. The gas in the second space 102 is exhausted through the second through-hole 14c, so as to balance the gas pressure in the second space 102, reduce the risk caused by an excessive gas pressure, and improve the safety of the battery pack 100. Optionally, the second through-hole 14c is disposed in any one of the first extension end portion 14a or the second extension end portion 14b to balance the gas pressure in the second space 102. Optionally, the second through-hole 14c is disposed in the first extension end portion 14a, and the second through-hole 14c is disposed in the second extension end portion 14b to enhance the efficiency of gas exhausting.

In an embodiment, the battery pack 100 further includes a second filler 60. The second filler 60 is disposed in the second through-hole 14c. A third clearance 60a exists between the second filler 60 and the second through-hole 14c. The third clearance 60a is configured to exhaust gas and restrict liquid from entering. The second filler 60 can reduce entry of the liquid into the second space 102 from the second through-hole 14c, and reduce the short-circuit risk.

In an embodiment, the second filler 60 is disposed in the second through-hole 14c along a direction opposite to the third direction Z, thereby reducing accumulation of the liquid on the surface of the second filler 60, further alleviating erosion of the liquid into the second filler 60, reducing entry of the liquid into the second space 102 from the second through-hole 14c, and further reducing the short-circuit risk.

In an embodiment, the second filler 60 is detachably disposed in the second through-hole 14c. In a case that the second filler 60 is disposed in the second through-hole 14c, when the battery pack 100 is in use or in a static standing state, if the gas pressure inside the second space 102 is greater than the external gas pressure, the gas can be automatically exhausted out of the second space 102 through the third clearance 60a, and the entry of the liquid into the second space 102 through the second through-hole 14c can be reduced. When the battery pack 100 is in a not-in-use state (a non-discharging state), the second filler 60 can be detached from the second through-hole 14c. The second through-hole 14c can be opened to increase the efficiency of gas exhausting. Optionally, the second through-hole 14c includes a threaded hole. The second filler 60 includes a screw.

In this application, the gas in the first space 101 is exhausted through the first through-hole 11b to achieve a balance of gas pressure in the first space 101. The gas in the second space 102 is exhausted through the second through-hole 14c to achieve a balance of gas pressure in the second space 102, thereby balancing the internal gas pressure of the entire battery pack 100. Through the first filler 30 disposed in the first through-hole 11b and the second filler 60 disposed in the second through-hole 14c, the entry of the liquid into the battery pack from the second through-hole 14c is reduced, the short-circuit risk is reduced, and the safety of the battery pack 100 is enhanced.

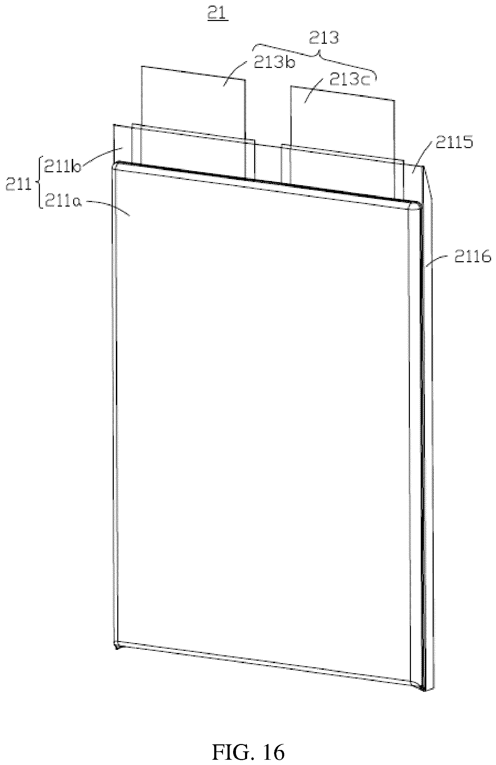

Referring to FIG. 16, FIG. 17, and FIG. 18, in an embodiment, the cell housing 211 includes a first part 211a and a second part 211b. The first part 211a accommodates the electrode assembly 212, and the second part 211b is connected to the first part 211a. The electrode terminals 213 protrude from the second part 211b.

In an embodiment, the cell assembly 20 includes a plurality of cells 21 stacked along the second direction Y. Optionally, the cell assembly 20 includes a plurality of cells 21, a part of the cells 21 are stacked into a first cell row 21a along the third direction Z, and another part of the cells 21 are stacked into a second cell row 21b along the third direction Z. The first cell row 21a and the second cell row 21b are arranged along the second direction Y.

In an embodiment, the cell 21 is in contact with and connected to the first housing 11, so as to dissipate the heat of the cell 21 to the external environment through the first housing 11.

In an embodiment, the cell housing 211 includes a first shell 2111 and a second shell 2112. The first shell 2111 is connected to the second shell 2112. A first recess 211c is disposed on at least one of the first shell 2111 or the second shell 2112. The electrode assembly 212 is disposed in the first recess 211c. The first shell 2111 and the second shell 2112 may be folded along a junction in between. In this way, the first shell 2111 and the second shell 2112 coincide to form a first part 211a, so as to enclose the electrode assembly 212. The rim of the first shell 2111 extends outward to form a plurality of first extension portions 2113. The rim of the second shell 2112 extends outward to form a plurality of second extension portions 2114. After the first shell 2111 and the second shell 2112 are folded along the junction in between, the first extension portion 2113 and the second extension portion 2114 coincide and are connected hermetically to form a second part 211b. Optionally, the first extension portion 2113 is hermetically connected to the second extension portion 2114 by a sealant. The second part 211b includes a first sealing portion 2115 and a second sealing portion 2116. The first sealing portion 2115 is disposed opposite to the junction. The electrode terminal 213 extends out of the first part 211a from the first sealing portion 2115. Optionally, the second part 211b includes two second sealing portions 2116. The two second sealing portions 2116 are disposed opposite to each other along the first direction X. Optionally, the second part 211b includes one first sealing portion 2115. The cell 21 includes two electrode terminals 213. The two electrode terminals 213 extend out of the cell housing 211 from the first sealing portion 2115. In other embodiments, the first shell 2111 is separate from the second shell 2112. The second part 211b includes two first sealing portions 2115. The two first sealing portions 2115 are disposed opposite to each other along the third direction Z. The cell 21 includes two electrode terminals 213. One of the electrode terminals 213 extends out of the cell housing 211 from one of the first sealing portions 2115, and the other electrode terminal 213 extends out of the cell housing 211 from the other first sealing portion 2115. The two electrode terminals 213 are disposed opposite to each other along the third direction Z.

In an embodiment, the first insulator 50 is disposed between the radiator 40 and the cell housing 211. The first insulator 50 covers a part of the electrode terminal 213, the part extending out of the cell housing 211, so as to strengthen the fixing of the electrode terminal 213, and improve heat dissipation for the electrode terminal 213.

In an embodiment, the first insulator 50 covers a part of the electrode terminal 213 and at least a part of the first sealing portion 2115 to enhance protection for the first sealing portion 2115 and improve heat dissipation for the cell housing 211, where the part of the electrode terminal extends out of the cell housing 211.

In an embodiment, the electrode assembly 212 includes a jelly-roll structure formed by winding a positive electrode plate, a negative electrode plate, and a separator. In some other embodiments, the electrode assembly 212 may be a stacked structure instead, in which the positive electrode plate, the separator, and the negative electrode plate are stacked in sequence to form an electrode assembly 212 unit, and then a plurality of electrode assembly 212 units are stacked to form an electrode assembly 212. Optionally, the cell housing 211 includes an aluminum laminated film. Optionally, the cell 21 includes a pouch cell.

In an embodiment, the battery pack 100 further includes a first circuit board 70. The first circuit board 70 is populated with a plurality of first conducting strips 71. Optionally, the first conducting strips 71 may be copper foil disposed on the first circuit board 70. The copper foil is connected to the traces of the first circuit board 70. Optionally, each of the first conducting strips 71 may be a conducting strip disposed on the first circuit board 70, such as a copper bar. The conducting strip is soldered to the first circuit board 70. Optionally, the first circuit board 70 includes a flexible circuit board (FPC, Flexible Printed Circuit). Optionally, the first circuit board 70 includes a printed circuit board (PCB, Printed Circuit Board). The first circuit board 70 can collect information such as voltage, resistance, and temperature of the cell assembly 20.

In an embodiment, the electrode terminal 213 includes a welding portion 213a extending out of the cell housing 211. The welding portion 213a is formed by bending the electrode terminal 213. The electrode terminals 213 of adjacent cells 21 are bent toward each other after passing through the first circuit board 70, and connected to the first conducting strip 71. In an embodiment, the electrode terminals 213 include a first terminal 213b and a second terminal 213c. The polarity of the first terminal 213b is opposite to the polarity of the second terminal 213c. One of the first terminal 213b or the second terminal 213c is a positive terminal, and the other is a negative terminal. Along the first direction X, a projection of the welding portion 213a of the first terminal 213b of a cell 21 at least partially overlaps a projection of the welding portion 213a of the second terminal 213c of an adjacent cell 21. The first terminal 213b and the second terminal 213c of adjacent cells 21 are bent toward each other, and the welding portion 213a of the first terminal 213b and the welding portion 213a of the second terminal 213c are connected to each other in a stacked manner. The welding portions 213a are connected to the first circuit board 70 by connecting the welding portions 213a of the adjacent cells 21, thereby reducing the processing steps.

In an embodiment, the first circuit board 70 includes a soldering zone. The welding portion 213a is soldered to the soldering zone. Optionally, the soldering zone may be copper foil on the first circuit board 70.

In other embodiments, along the first direction X, the projection of the first terminal 213b of the cell 21 may at least partially overlap the projection of the first terminal 213b of an adjacent cell 21, and the first terminals of the adjacent cells may be connected by the first circuit board 70 to implement parallel connection between the cells 21.

In some embodiments, the cell assembly 20 further includes a plurality of heat dissipation portions 22. The heat dissipation portions 22 are in contact with and connected to the cell 21 to dissipate heat for the cell 21. Optionally, the heat dissipation portion 22 is in contact with and connected to the first housing 11, so as to transfer the heat of the cell 21 to the first housing 11, so that the cell 21 is cooled through the first housing 11. Optionally, the heat dissipation portion 22 includes an aluminum shell.

In an embodiment, along the first direction X, a projection of the heat dissipation portion 22 overlaps a projection of the cell housing 211. Along the second direction Y, the projection of the heat dissipation portion 22 overlaps the projection of the cell housing 211. Along the third direction Z, the projection of the heat dissipation portion 22 overlaps the projection of the cell housing 211, thereby increasing the contact area between the heat dissipation portion 22 and the cell housing 211, and enhancing the heat dissipation efficiency.

In an embodiment, a first elastomer 221a is disposed between adjacent heat dissipation portions 22 to provide an expansion space for the cell 21. Optionally, the first elastomer 221a includes foam.

In an embodiment, the battery pack 100 further includes an insulating support80. The insulating support80 covers a part of the first circuit board 70 to insulate the first circuit board 70. A first insulator 50 is disposed between the insulating support80 and the first circuit board 70. The insulating support80 is connected to the first circuit board 70 by the first insulator 50. The first insulator 50 can further insulate the first circuit board 70.

Optionally, the insulating support80 is made of an insulating material. Optionally, the insulating support80 is made of a metal material and an insulating material. The insulating material may cover the outer surface of the metal material.

In an embodiment, the battery pack further includes a sampling harness 100a. The sampling harness 100a is connected to the first circuit board 70. The sampling harness 100a passes through the insulating support80 and the radiator 40, and is connected to the second circuit board 13.

In an embodiment, the battery pack 100 further includes a first electrical connecting portion 100b and a second electrical connecting portion 100c. The first electrical connecting portion 100b and the second electrical connecting portion 100c are configured to input or output electrical energy. Optionally, the first electrical connecting portion 100b and the second electrical connecting portion 100c are welded to the first circuit board 70. Optionally, the first electrical connecting portion 100b is connected to one of the first terminal 213b or the second terminal 213c. The second electrical connecting portion 100c is connected to the other of the first terminal or the second terminal. Optionally, the first electrical connecting portion 100b and the second electrical connecting portion 100c each include a copper bar.

In an embodiment, the radiator 40 includes a first surface 40e and a second surface 40f disposed along the third direction Z. A second space 102 is formed between the first surface 40e and the second circuit board 13. The second surface 40f is connected to the first insulator 50. The second surface 40f is connected to the insulating support 80 by the first insulator 50.

In an embodiment, the radiator 40 includes a first accommodation space 41. The first accommodation space 41 runs through the radiator 40 along the third direction Z. Optionally, along the first direction X, the first accommodation space 41 is located in the middle of the radiator 40. The sampling harness 100a passes through the insulating support80 and the first accommodation space 41, and is connected to the second circuit board 13.

In an embodiment, the radiator 40 includes a second accommodation space 42. The second accommodation space 42 runs through the radiator 40 along the third direction Z. The first electrical connecting portion 100b passes through the insulating support80 and the second accommodation space 42, and is connected to the first connecting portion 131.

In an embodiment, the radiator 40 includes a third accommodation space 43. The third accommodation space 43 runs through the radiator 40 along the third direction Z. The second electrical connecting portion 100c passes through the insulating support80 and the third accommodation space 43, and is connected to the second connecting portion 132.

In an embodiment, the battery pack 100 further includes a second insulator 100d. The second insulator 100d is disposed in the first accommodation space 41. The second insulator 100d protrudes beyond the first surface 40e. With the second insulator 100d disposed in the first accommodation space 41, and with the second insulator 100d protruding beyond the first surface 40e of the radiator 40, the possibility that the liquid enters the first accommodation space 41 is reduced, and the liquid accumulation in the first accommodation space 41 is reduced.

In an embodiment, the second insulator 100d is configured to be formed by curing a curable second insulating material disposed in the first accommodation space 41. Optionally, the second insulator 100d includes one of a polyurethane adhesive, an epoxy adhesive, or a silicone adhesive. Optionally, the second insulator 100d includes foam glue.

In an embodiment, the battery pack 100 further includes a third insulator 100e. The third insulator 100e is disposed in the second accommodation space 42 to insulate and fix the first electrical connecting portion 100b. With the third insulator 100e protruding beyond the first surface 40e, the possibility that the liquid enters the second accommodation space 42 is reduced, and the liquid accumulation in the second accommodation space 42 is reduced.

In an embodiment, the third insulator 100e is configured to be formed by curing a curable third insulating material disposed in the second accommodation space 42. Optionally, the third insulator 100e includes one of a polyurethane adhesive, an epoxy adhesive, or a silicone adhesive. Optionally, the third insulator 100e includes foam glue.

In an embodiment, the battery pack 100 further includes a fourth insulator 100f. The fourth insulator 100f is disposed in the third accommodation space 43 to insulate and fix the second electrical connecting portion 100c. With the fourth insulator 100f protruding beyond the first surface 40e, the possibility that the liquid enters the third accommodation space 43 is reduced, and the liquid accumulation in the third accommodation space 43 is reduced.

In an embodiment, the fourth insulator 100f is configured to be formed by curing a curable fourth insulating material disposed in the third accommodation space 43. Optionally, the fourth insulator 100f includes one of a polyurethane adhesive, an epoxy adhesive, or a silicone adhesive. Optionally, the fourth insulator 100f includes foam glue.

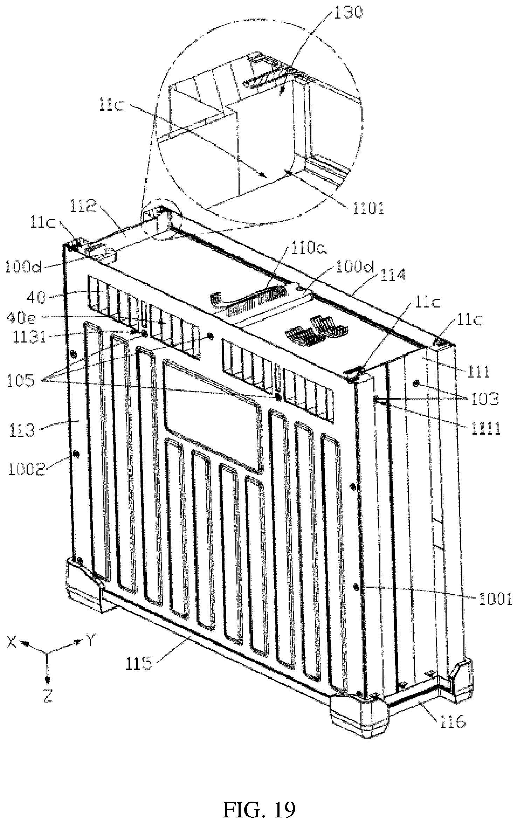

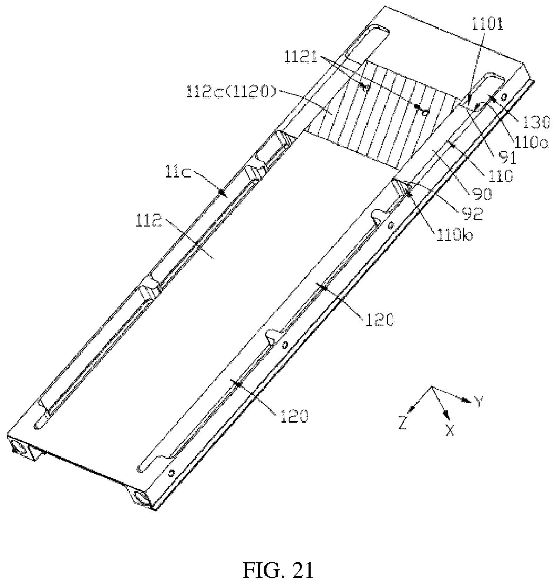

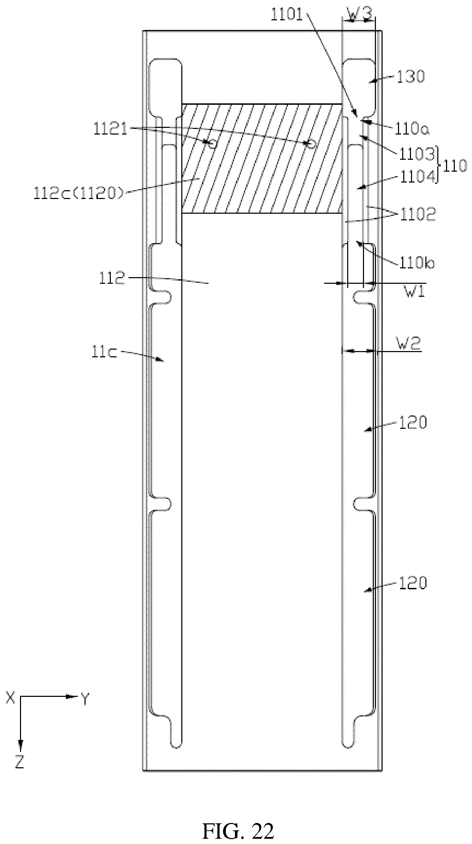

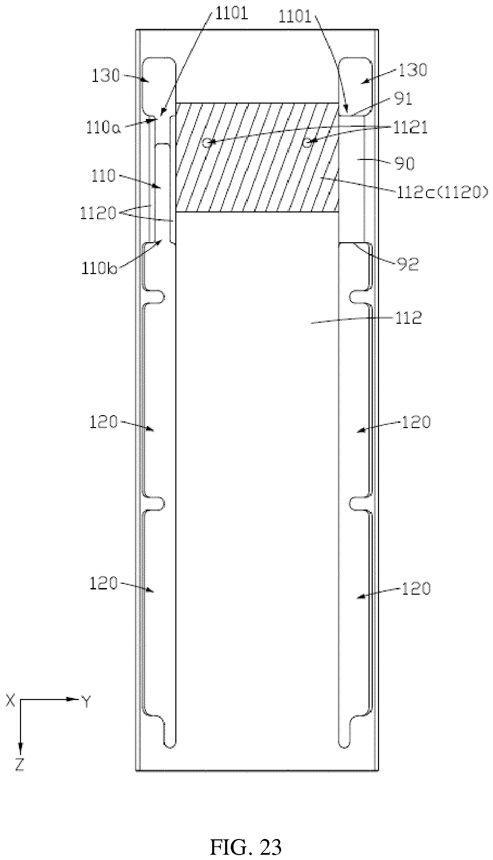

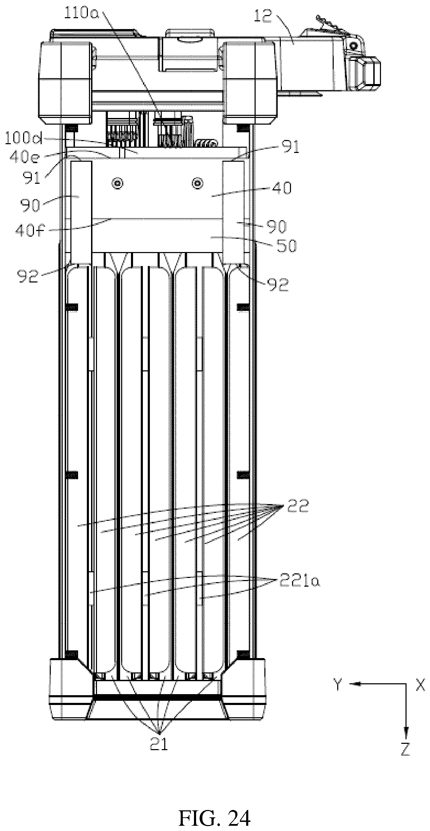

Referring to FIG. 7 and FIG. 19 to FIG. 24, in an embodiment, a first channel 11c is disposed on the sidewall 11a. Optionally, the first channel 11c is disposed in the first wall 111. Optionally, the first channel 11c is disposed in the second wall 112. Optionally, the first channel 11c is disposed in both the first wall 111 and the second wall 112 to enhance the liquid draining efficiency. Optionally, the number of the first channels 11c disposed in the first wall 111 and the second wall 112 may be one or more, such as two. Optionally, the first channel 11c may be disposed in at least one of the third wall 113 or the fourth wall 114. Optionally, when the battery pack 100 is in a mounted state, the bottom wall 115 faces the mounting face. In this application, the first wall 111 and the second wall 112 are both equipped with a first channel 11c. The first channel 11c provides a passage between the second space 102 and the first through-hole 11b. The liquid in the second space 102 flows from the first channel 11c to the first through-hole 11b, and is expelled out of the battery pack 100 from the first through-hole 11b, thereby reducing the short-circuit risk caused by the liquid in the battery pack 100 and improving the safety of the battery pack 100.

The first channel 11c disposed in the second wall 112 is described below as an example.

In an embodiment, a first opening 1101 is created at an end of the first channel 11c, the end being oriented toward the second housing 12. The first opening 1101 serves as an inlet port. The liquid intruding into the second space 102 enters the first channel 11c through the first opening 1101, and is expelled through the first through-hole 11b. Optionally, along a direction opposite to the third direction Z, the first opening 1101 is located at a position that does not go beyond the first surface 40e, thereby making it convenient for the liquid intruding into the second space 102 to enter the first channel 11c, and enhancing the efficiency of liquid drainage. Optionally, along a direction opposite to the third direction Z, the first opening 1101 is located below the first surface 40e, thereby further enhancing the efficiency of liquid drainage.

In an embodiment, the first channel 11c extends in the second wall 112 along the third direction Z. The first channel 11c includes a first section 110 and a second section 120 arranged along the third direction Z. The first section 110 communicates with the second section 120. The first section 110 includes a first end 110a and a second end 110b disposed along the third direction Z. The first end 110a is disposed at an end of the first section 110, the end being oriented facing from the second section 120. The second end 110b is connected to the second section 120. Along the first direction X, a projection of the first section 110 overlaps a projection of the radiator 40. The projection of the first section 110 overlaps a projection of the first insulator 50. The projection of the first section 110 overlaps a projection of the cell housing 211. Along the first direction X, a projection of the second section 120 is separate from the projection of the first insulator 50. The projection of the second section 120 overlaps the projection of the cell housing 211. Along the third direction Z, the second end 110b protrudes beyond the first insulator 50.

In an embodiment, along the first direction X, the first channel 11c includes a second opening 111c toward the radiator 30. The battery pack 100 further includes a first spacer 90. The first spacer 90 covers at least a part of the second opening 111c. The first spacer 90 includes a first side 91 and a second side 92 that are disposed along the third direction Z. Along the third direction Z, the first side 91 is not lower than the second surface 40f, and the second side 92 protrudes beyond the first insulator 50, thereby reducing entry of the first insulating material into the first channel 11c.

Optionally, along the third direction Z, the first side 91 is disposed at the first end 110a. The first side 91 is located below the first surface 40e and above the second surface 40f. The second side 92 protrudes beyond the first insulator 50. During inverted pouring of the flowing first insulating material, such arrangement reduces the entry of the flowing first insulating material into the first section 110, and reduces the risk that the first section 110 is clogged and unable to drain the liquid.

In an embodiment, along the second direction Y, two opposite stepped faces 1102 are disposed on the first housing 11. The first spacer 90 connects the two stepped faces 1102, and covers at least a part of the first section 110, thereby facilitating connection of the first housing 11 to the first spacer 90.

In an embodiment, two opposite stepped faces 1102 are disposed on the second wall 112. Along the first direction X, the height of the stepped faces 1102 is lower than that of the second wall region 112c. The first spacer 90 is disposed on the stepped face 1102, and covers the first section 110. Along the second direction Y, the projection of the first section 110 is separate from the projection of the radiator 40. The projection of the first section 110 is separate from the projection of the first insulator 50. Optionally, along the first direction X, a surface of the first spacer 90, which is oriented facing from the stepped face 1102, is flush with a surface of the second wall region 112c; and a surface of the first spacer 90, which is oriented facing from the stepped face 1102, is connected to the second sidewall 40b of the radiator 40, thereby improving the hermeticity between the first spacer 90 and the second sidewall 40b. Optionally, along the first direction X, the surface of the first spacer 90, which is oriented facing from the stepped face 1102, protrudes beyond the surface of the second wall region 112c; and the surface of the first spacer 90, which is oriented facing from the stepped face 1102, is connected to the second sidewall 40b of the radiator 40, thereby enabling compressed connection between the first spacer 90 and the second sidewall 40b as well as compressed connection between the second spacer 90 and the stepped face 1102, and further improving the hermeticity between the first spacer 90 and the second sidewall 40b.

In an embodiment, one side of the first spacer 90 is connected to the stepped face 1102, and the other side is connected to the radiator 40. Optionally, one side of the first spacer 90 disposed along the first direction X is bonded to the stepped face 1102, and the other side is bonded to the second sidewall 40b of the radiator 40, thereby further improving the hermeticity between the first spacer 90 and the second sidewall 40b. Optionally, the first spacer 90 includes foam. Optionally, the first spacer 90 and the second wall 112 are formed in one piece.

In an embodiment, the first channel 11c includes a third section 130. The third section 130 and the first section 110 are disposed along the third direction Z. The third section 130 is connected to the first end 110a. The third section 130 communicates with the first section 110 through a first opening 1101. Along the first direction X, a projection of the third section 130 overlaps a projection of the second accommodation space 42, and the projection of the third section 130 overlaps a projection of the second insulator 100d. A part of the second insulator 100d is disposed in the third section 130. The second insulator 100d is separate from the first opening 1101. The third section 130 can accommodate a part of the second insulating material that overflows from the second accommodation space 42, thereby reducing the risk that the second insulator 100d clogs the first section 110 and disrupts liquid drainage.

Optionally, along the second direction Y, the width W1 of the first section 110 is less than the width W3 of the third section 130. By increasing the width of the third section 130, more of the second insulator 100d can be accommodated. By decreasing the width of the first section 110, the entry of the second insulator 100d into the first section 110 from the first opening 1101 can be further reduced, thereby further reducing the risk that the second insulator 100d clogs the first section 110 and disrupts liquid drainage. Optionally, along the second direction Y, the width W2 of the second section 120 is greater than the width W1 of the first section 110. By increasing the width of the second section 120, it is convenient for the liquid to flow out, the efficiency of liquid drainage is improved, the weight of the second wall 112 is reduced, and the battery pack 100 is made lightweight.

In an embodiment, the first section 110 includes a first region 1103 and a second region 1104 that communicate with each other. The first opening 1101 is disposed in the first region 1103. The first region 1103 communicates with the third section 130, and the second region 1104 communicates with the second section 120. Along the first direction X, a distance between the first region 1103 and the first spacer 90 is less than a distance between the second region 1104 and the first spacer 90, thereby further reducing the entry of the second insulating material into the first section 110 from the first opening 1101, and further reducing the risk that the second insulator 100d clogs the first section 110 and disrupts liquid drainage.

In an embodiment, two first channels 11c are disposed in the second wall 112. The two first channels 11c are disposed along the second direction Y.

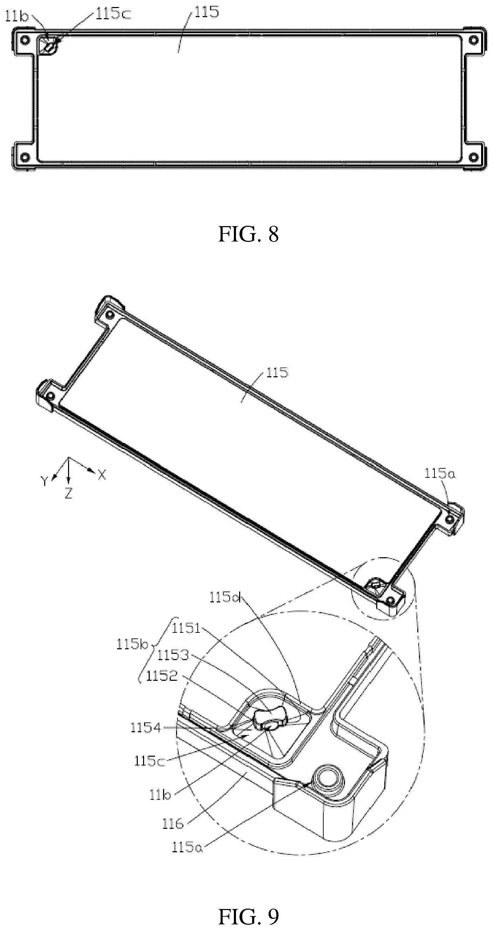

Referring to FIG. 4 and FIG. 9, in an embodiment, the bottom wall 115 includes a third region 115c. The third region 115c is connected to the edge of the first through-hole 11b. One end of the second section 120, which is oriented facing from the first section, communicates with the third region 115c. The third region 115c includes a plurality of tilting faces 1154. The plurality of tilting faces 1154 are connected in sequence clockwise or counterclockwise, and converge toward the first through-hole 11b, thereby allowing the liquid to converge toward the first through-hole 11b, and enhancing the efficiency of liquid drainage.

In an embodiment, the bottom wall 115 includes a fourth region 115d. The fourth region 115d is disposed at an edge of the third region 115c. The fourth region 115d protrudes beyond the surface of the bottom wall 115 along a direction opposite to the third direction Z. The fourth region 115d can reduce spillage of the liquid out of the third region 115c into other regions of the bottom wall 115.

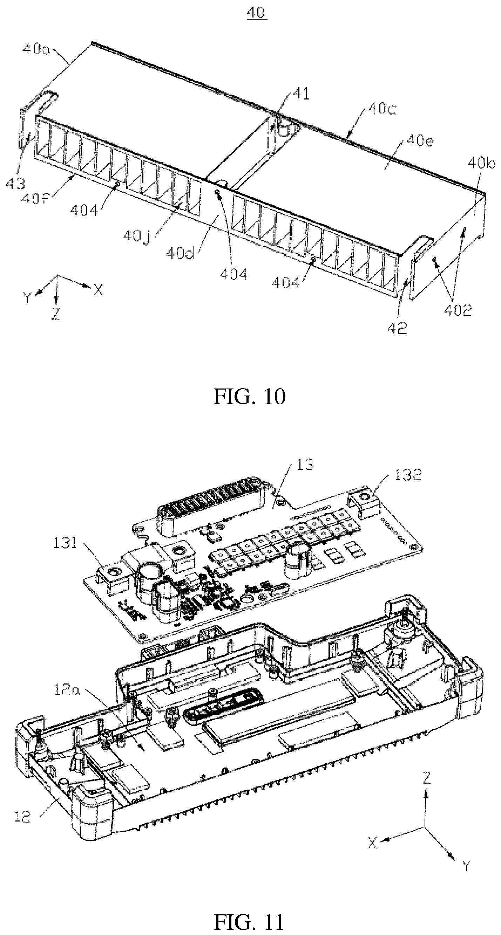

Referring to FIG. 4 and FIG. 10, in an embodiment, a first aperture 10c and a second aperture 10d are created on the first housing 11. The first aperture 10c and the second aperture 10d communicate with the outside. A second channel 40j is provided in the radiator 40. The second channel 40j communicates with the first aperture 10c and the second aperture 10d. The radiator 40 dissipates the heat of the electrode terminals 213 from the first aperture 10c and the second aperture 10d to the external environment through the second channel 40j, thereby improving heat dissipation for the electrode terminals 213, and lowering the temperature of the battery pack 100. Optionally, the radiator 40 may dissipate heat for the first circuit board 70, thereby further improving heat dissipation for the battery pack 100. Optionally, the first aperture 10c is created on the third wall 113, and the second aperture 10d is created on the fourth wall 114. Along the second direction Y, the first aperture 10c runs through the third wall 113, and the second aperture 10d runs through the fourth wall 114.

In an embodiment, the battery pack 100 may utilize external air to carry away the heat of the first circuit board 70 and the cell assembly 20 through the flow of air. In an embodiment, the battery pack 100 may be applied to a device that is in a static state when in use. When the battery pack 100 is in a static state, the heat may be dissipated by utilizing natural air or external air cooling equipment. In an embodiment, the battery pack 100 may be applied to a device that is in a dynamic state when in use, such as an unmanned aerial vehicle, an electric power-assisted vehicle, in which rapid heat dissipation of the battery pack 100 can be implemented due to fast air flow when the device is moving.

In an embodiment, the radiator 40 includes a plurality of second channels 40j. The plurality of second channels 40j are arranged along the first direction X. Optionally, among the two outermost second channels 40j disposed along the first direction X, one communicates with the first accommodation space 41, and the other of the two outermost second channels 40j disposed along the first direction X communicates with the second accommodation space 42.

In an embodiment, the outer surface of the radiator 40 includes a metal material layer such as aluminum, thereby facilitating heat dissipation. Optionally, the radiator 40 is made of a material including a metal material, and the outer surface of the radiator 40 may be coated with an insulating layer. Optionally, the radiator 40 is made of a material including a metal material, and the outer surface of the radiator 40 includes a metal material layer.

In an embodiment, when the first insulating material is poured in an inverted manner, the cell 21, the first circuit board 70, the insulating support80, and the radiator 40 are mounted in the first housing 11 first, and the radiator 40 is connected to the first housing 11, and then the second insulating material is injected into the first accommodation space 41, the third insulating material is injected into the second accommodation space 42, and the fourth insulating material is injected into the third accommodation space 43. The second insulating material, the third insulating material, and the fourth insulating material are cured to seal the radiator 40. Subsequently, the first housing 11 is inverted, and the flowing first insulating material is injected into the battery pack 100 from the bottom of the cell assembly 20 along a direction opposite to the third direction Z. The first spacer 90 blocks the insulating material, and reduces entry of the first insulating material into the first channel 11c. The first insulating material is cured to form the first insulator 50.

In an embodiment, the materials injected into the first accommodation space 31, the second accommodation space 32, and the third accommodation space 33 are the same insulating material.

In an embodiment, the materials injected into the first accommodation space 31, the second accommodation space 32, and the third accommodation space 33 are different insulating materials.

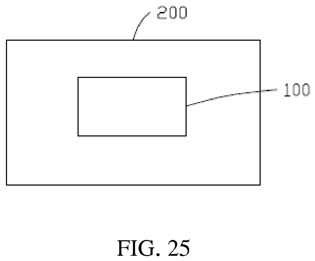

Referring to FIG. 25, this application further provides an electrical device 200 that employs the battery pack 100. In an embodiment, the electrical device 200 of this application may be, but is not limited to, an unmanned aerial vehicle, a backup power supply, an electric vehicle, an electric motorcycle, an electric power-assisted bicycle, an electric tool, a large household storage battery, or the like.

A person of ordinary skill in the art understands that the foregoing some embodiments are merely intended to illustrate this application, but not intended to limit this application. All appropriate modifications and changes made to some embodiments without departing from the conception of this application still fall within the protection scope of this application.

## Claims

1. A battery pack (100), comprising:
a housing (10) comprising a first housing (11) and a second housing (12); wherein the first housing (11) is connected to the second housing (12), a first space (101) is formed in the first housing (11), the first housing (11) comprises a plurality of sidewalls (11a) and a bottom wall (115) connected to the plurality of sidewalls (11a), and the plurality of sidewalls (11a) and the bottom wall (115) form the first space (101);
a cell assembly (20) accommodated in the first space (101), and a first clearance (11a) is formed between the cell assembly (20) and the plurality of sidewalls (11a);
the plurality of sidewalls (11a) are hermetically connected to the bottom wall (115), a first through-hole (11b) is provided in at least one of a sidewall or the bottom wall (115), the first through-hole (11b) extends through the sidewall or the bottom wall (115), and the first through-hole (11b) is in communication with the first clearance (11a) ; and
a first filler (30) is detachably disposed in the first through-hole (11b), a second clearance (10b) exists between the first filler (30) and the first through-hole (11b), and the second clearance (10b) is configured to allow a gas to escape.

2. The battery pack (100) according to claim 1, wherein the plurality of sidewalls (11a) comprise a first wall (111), a second wall (112), a third wall(113) and a fourth wall (114); the first wall (111) and the second wall (112) are disposed along a first direction (X); the third wall (113) and the fourth wall (114) are disposed along a second direction (Y);
the first wall (111) is connected to the third wall (113) and the fourth wall (114); the second wall (112) is connected to the third wall (113) and the fourth wall (114); the first wall (111), the second wall (112), the third wall (113), and the fourth wall (114) are connected to the bottom wall (115) and form the first space (101); and the first direction (X) is perpendicular to the second direction (Y).

3. The battery pack (100) according to claim 1 or 2, wherein the first through-hole (11b) is provided in the bottom wall (115); the second housing (12) and the bottom wall (115) are disposed along a third direction (Z), the first filler (30) is disposed in the first through-hole (11b) along a direction opposite to the third direction (Z), and the third direction (Z) is perpendicular to both the first direction (X) and the second direction (Y).

4. The battery pack (100) according to claim 3, wherein the first housing (11) comprises a first connecting piece (116), the first connecting piece (116) comprises a support portion (1161), the bottom wall (115) is disposed on the support portion (1161);
the first connecting piece (116) is provided with a first connecting piece through-hole (116b), the first connecting piece through-hole (116b) extends through the first connecting piece (116) along the third direction (Z), and a part of the first filler (30) is disposed in the first connecting piece through-hole (116b) and connected to the first through-hole (11b).

5. The battery pack (100) according to claim 4, wherein the first connecting piece (116) comprises a bottom face (116a), the bottom face (116a) is oriented facing away from the bottom wall (115), and, along the third direction (Z), an accommodation space (116c) is formed between the first filler (30) and the bottom face (116a).

6. The battery pack (100) according to claim 3, wherein the bottom wall (115) comprises a first position limiter (115b), the first position limiter (115b) is connected to the bottom wall (115), and, in the third direction (Z), the first position limiter (115b) is located above the first through-hole (11b).

7. The battery pack (100) according to claim 2, wherein the battery pack (100) further comprises a radiator (40); the radiator (40) is hermetically connected to surfaces of the first wall (111), the second wall (112), the third wall (113), and the fourth wall (114); and a second space (102) is (102) formed between the radiator (40), the first housing (11), and the second housing (12).

8. The battery pack (100) according to claim 7, wherein the battery pack (100) further comprises a connecting support (14), the connecting support (14) is disposed between the first housing (11) and the second housing (12), the connecting support (14) connects the first housing (11) to the second housing (12), the connecting support (14) is provided with a second through-hole (14c), and the second through-hole (14c) is in communication with the second space (102).

9. The battery pack (100) according to claim 8, wherein the connecting support (14) comprises a first extension end portion (14a) and a second extension end portion (14b) disposed along the first direction (X); along the first direction (X), the first extension end portion (14a) protrudes beyond the first wall (111) along a direction opposite to the first direction (X), and the second extension end portion (14b) protrudes beyond the second wall (112) along the first direction (X); and the second through-hole (14c) extends through at least one of the first extension end portion (14a) or the second extension end portion (14b) along the third direction (Z).

10. The battery pack (100) according to claim 9, the battery pack (100) further comprises a second filler (60), the second filler (60) is detachably disposed in the second through-hole (14c), a third clearance (60a) exists between the second filler (60) and the second through-hole (14c), and the third clearance (60a) is configured to allow the gas to escape.

11. The battery pack (100) according to claim 10, wherein the second filler (60) is disposed in the second through-hole (14c) along a direction opposite to the third direction (Z).

12. The battery pack (100) according to any one of claims 5 to 10, wherein a first channel (11) is disposed on at least one of the first wall (111) or the second wall (112), and the first space (101) communicates with the second space (102) through the first channel (11).

13. The battery pack (100) according to claim 7, wherein the battery pack (100) further comprises a first insulator (50), the first insulator (50) is disposed between the radiator (40) and the cell assembly (20), and the first insulator (50) connects inner surfaces of the first wall (111), the second wall (112), the third wall (113), and the fourth wall (114).

14. The battery pack according to claim 13, wherein the first insulator is configured to be formed by curing a flowing first insulating material disposed in the battery pack.

15. An electrical device (200), wherein the electrical device comprises the battery pack (100) according to any one of claims 1 to 14.
